(19) Europäisches Patentamt
European Patent Office
Office européen des brevets

(11) EP 0 691 608 A1

(12) **EUROPEAN PATENT APPLICATION**

(43) Date of publication:
**10.01.1996 Bulletin 1996/02**

(51) Int. Cl.$^6$: **G06F 9/44**, G06F 9/45

(21) Application number: **94110651.0**

(22) Date of filing: **08.07.1994**

(84) Designated Contracting States:
**DE FR GB**

(71) Applicant: **International Business Machines Corporation**
**Armonk, N.Y. 10504 (US)**

(72) Inventor: **LaFitte, Jean-Louis**
**F-93164 Noisy-le-Grand, Cedex (FR)**

(74) Representative: **Barth, Carl Otto et al**
**CH-8803 Rüschlikon (CH)**

vp(54) **Method and apparatus for dynamically preparing data for processing in a computing environment**

(57) The present application concerns a method and apparatus for accessing data by handling a name in order to obtain the respective terminal name which enables a computer to access the data addressed by said name. First it is checked whether said name is a terminal name or not. If said name is a terminal name, it will directly be used to access said data. In the case that said name is not a terminal name the algebra of natural transformation is applied on an environment (w) to get a terminal functor. Then said terminal functor is applied on said name to get a terminal name which might then be used by a computer to access said date. The present method and apparatus is of particular interest in the field of parallel processing and numerical intensive computing, where several of the above steps can be carried out in parallel taking several names as input to obtain the respective terminal names.

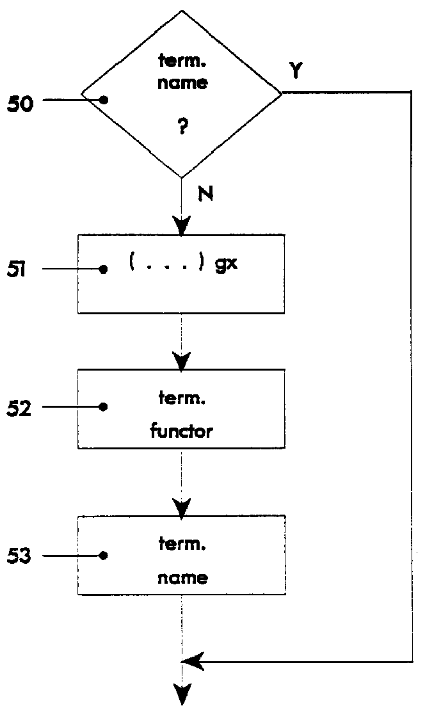


FIG. 12

EP 0 691 608 A1

## Description

TECHNICAL FIELD

The present invention concerns a method and an apparatus for handling and preparing data, in particular non-trivially structured data, in order to facilitate efficient and fast processing of these data in a computing environment.

BACKGROUND OF THE INVENTION

Conventional computer systems, known as von Neumann machines, typically relied on a single processing unit, called CPU (Central Processing Unit), to perform processing functions, a memory and a connection tube that can transmit a single word between the CPU and the memory. Source code programs written for those computers were translated into a sequence of machine instructions which were then executed one-by-one by the CPU. Where repetitive sequences of steps exist in an original program, the single processor takes up each instruction, one at a time and repeats those same instructions several times. The task of a program is to change the contents of said memory in some major way. This task must entirely be accomplished by pumping single words back and forth through the connection tube. Since this tube is the limiting factor, as far as performance of the whole computer system is concerned, it is sometimes called von Neumann bottleneck. These kind of von Neumann machines are due to their concept not suited for today's computational tasks such as numerical intensive computing (NIC) requiring millions of floating point operations per second. Even a conventional system boosted by an additional arithmetic processor, being designed to process special tasks in parallel to the CPU, does not meet today's requirements. There is a great demand for improving these kind of conventional computers.

Various systems, herein referred to as parallel processing systems or parallel processing environments, are known which employ several processors, or processing units, operating in parallel. Two different basic concepts for parallel processing have been developed called single-instruction multiple-data (SIMD) machines and multiple-instructions multiple-data (MIMD) machines. The latter ones are characterized in that each processor has its own memory for executing different programs or instructions, whereas in a SIMD machine all processors access a large common memory. MIMD machines are also known as distributed memory systems and SIMD machines are sometimes called shared memory or symmetric multiprocessor systems. SIMD computing has limited applicability, because it requires that each of the different sets of data be processed in the same way, i.e. by concurrently running the same instructions in each of the parallel processors.

The most current kind of systems are MIMD based, since there are - in addition to the above mentioned disadvantage - technical limitations to how many processors can be built into a SIMD system. Such an MIMD machine has separate programs working on separate sets of data at the same time, and may have many separate CPUs, each with its own instructions and each processing its own data. These separate CPUs are interconnected so that they can cooperate to solve a problem. It is known to be very difficult in an MIMD machine to provide a means for coordinating the activities of the several separate processors so that they can work on problems simultaneously. As more and more CPUs are added to a system, the overhead caused by interaction and communication between them increases.

While the latter two parallel processing systems (SIMD and MIMD) have provided for a manifold increase of operations per second, the programming, data storage and data handling have still to be improved in order to optimize the whole system. These machines have, due to their design constraints, similar limitations as the classical von Neumann machine.

There is a great demand for improved multiprocessor and parallel processing environments in NIC. As illustrated in Figure 1, typical applications in High Energy Physics (HEP), Computational Fluid Dynamics, Flow simulation, Finite Elements methods, Structure Analysis, Weather forecast, etc... require about 50% of the total processing time for indirections, and 50% for the actual execution of an algorithm or operation. Just 25% of the latter are consumed for floating point operations in the parallel processor. Even parallel processors designed to run Teraflops ($10^{12}$ floating point operations per second) could be substantially improved by optimizing the indirections, i.e. by speeding up the management, handling and preparation of data. In most applications, the complexity and dynamicity of data structures will further increase such that the according indirections will consume even more than 50% of the total processing time. Taking into account that there is often an association between the dimensionality of data and their geometry, called a mesh or a grid, which is quite complex and the structure of which can be dynamically changed during the very run of the respective application, it becomes even more important to improve the preparation of these data.

There is no prior art known to the Applicants which address the present problem.

It is an object of the present invention to provide a method for improved handling, preparation and management of data prior to providing them to a computing environment.

It is an object of the present invention to provide a method for improved handling, preparation and management of static and dynamic complex data (herein referred to as non-trivially structured data) in a parallel processing environment.

It is another object of the present invention to provide a hardware implementation of said methods.

SUMMARY OF THE INVENTION

The above objects have been accomplished by providing a method in accordance with claim 1 and a hardware implementation of said method, referred to as substitution engine, in accordance with claim 7.

DESCRIPTION OF THE DRAWINGS

The invention is described in detail below with reference to the following drawings:

**FIG. 1** shows a typical pie-chart of the total processing time in numerical intensive computing.
**FIG. 2** shows a plane spread up by a syntactic axis and the time axis.
**FIG. 3** shows a 3-dimensional system of coordinates including the paradigmatic axis.
**FIG. 4** schematically illustrates a static data structure and the indirections required for accessing the data.
**FIG. 5** illustrates the commutativity of the functions i and m.
**FIG. 6** shows a commutative diagram illustrating the principle of a natural transformation.
**FIG. 7** illustrates the relation between ormula /'g' slr slr/ and $g_{caten}$.
**FIG. 8** illustrates the composition go transforming a list of functor names ormula /('f1,f2,' ellip ,'fn')/ into a functor being the mathematical composition of the functors of the go domain.
**FIG. 9** illustrates how the substitution engine finds the terminal functors to be carried out.
**FIG. 10** illustrates the relation between environments and terminal functors.
**FIG. 11** illustrates the architecture of the present substitution engine.
**FIG. 12** is a flow-chart defining essential steps of the present
**FIG. 13** shows a flow-chart of a further step according to the present invention.

GENERAL DESCRIPTION

A prerequisite when describing the present invention are sufficiently detailed definitions and statements of the meaning of the expressions and terms hereinafter used. Prior to describing the present invention this topic will be addressed.

Data are usually functions of independent variables or dimensions such as time, space, energy and so forth. A function of dimension 0 defines a point. A function of dimension 1, e.g. the velocity v being a function of the time, usually written as v(t), defines a line. The dimension 2 makes up a plane such as for example the acceleration b being known as b(t,v). The dimension 3 defines a three-dimensional system. Some data can have five or more dimensions and can be of rank 2 or greater, rank 0 being commonly a scalar, rank 1 a vector, etc... Often there exists an association between the dimensionality of data and their geometry. This association is usually referred to as mesh or grid and might be quite complex. Additionally, in some applications the structure of such mesh or grid can even dynamically change during the very run of computations.

The Syntactic Axis

Up to now, computing essentially concentrated on algorithms and computer languages - along with their syntaxes - in order to be able to describe those algorithms to an mechanical automaton. Syntax, as herein used, defines the structure of expressions in a language and describes the rules governing the structure of said language. The meaning of the expression syntax is illustrated in Figure 2, showing a short sequence of a program to be processed along the time axis 21. The time axis 21 and the syntactic axis 22 spread out a plane 20. This two-dimensional representation is already known in the art. The exemplary program shown in Figure 2, is a short PASCAL program for calculating the energy E as function of the mass m. In the present example no indirections are required.

The Paradigmatic Axis

It is herein assumed that there is a third axis, herein referred to as paradigmatic axis 23, being orthogonal to the axis 21 and 22, and thus being independent of the latter two. Along this third axis 23, as shown in Figure 3, names of the functions to be carried out by a mechanical automaton as well as the names of the data to be manipulated by the given functions are substituted to other names to finally be valuated (valuated means: to give a value or a content).

Data Structures

In the present description, data are classified according to their characteristics as follows: trivial data structures, static complex data structures, and dynamic complex data structures. A data structure is considered to be trivial when the data can directly be accessed - known as direct addressing - through the indices characterizing their location in the

rank. For example, dense matrix calculations based on structured meshes belong to this category. With other words, the operands of an instruction, hereinafter called terminal name, contains the direct address of the data to be processed. Direct addressing is also known as first level addressing since the operand of an instruction points to the location in the memory where the very data to be processed may be found.

A data structure is considered to be complex, when it is not longer possible to access the data directly, but requires one, or a chain of operations to determine the address (i.e. the terminal name) of the data in term of the indices characterizing their location in the rank. This method of accessing data is known as indirect addressing. In case that just one indirection is required to get the address of an operand (= data to be processed) the level of addressing is two. If further indirections are necessary, the level of addressing is greater than two.

A complex data structure is static when the structure is known and defined in advance and does not change during the calculation. A static data structure is schematically illustrated in Figure 4. As shown in this Figure, the name na 30 points to another name nb 31 situated at level 34. This second name nb 31 in turn points to the next name, which is a terminal name tn 32, at level 35. This terminal name defines the location of the data 33 to be processed. In this example, the data are stored at level 36. The indirections which are required for accessing the data 33, are shown as arrows 37 - 39. In such cases, i.e. when accessing data in a static data structure, all or part of the indirections may be resolved beforehand, i.e. before the (parallel) processors start to process the data. For example, compressed sparse matrix or simple unstructured grids are represented by static complex data structures.

A complex data structure is called dynamic, when, during the computation, the structure depends of and/or evolves both in its nature and in its size. The respective indirections have then to be resolved during the ongoing calculations in the computing environment (e.g. a parallel processing environment). MonteCarlo simulations, due to their random nature and unstructured moving, or adaptive grids, are described by such dynamic complex data structures. Static complex data structures as well as dynamic complex data structures are herein called non-trivial data structures, for the sake of simplicity.

Internal and External Objects

Objects, in the sense of external objects or purely internal objects, are built up using sentences complying with laws LE, related to the external universe and/or laws LI, related to the computer internal world. The external universe of the computer is made of real objects (e.g. counts, payroll, stocks, .... ). These kind of objects and their universe (the set of the former) are qualified as external. External objects are ruled by laws or relations, identified herein as LE. This universe is not part of the present subject, it is however the justification of computers, and is referred to, only when necessary. (The external universe is also sometimes called 'real universe').

Since Von Neumann, the internal universe has been defined as being made up of heterogeneous objects. For the scope of the present description, three types of objects are distinguished within computers:

- hardware (e.g. process units, device, storage...), herein referred to as resources,
- software (e.g. supervisor, compilers,...) referred to as processes, and
- representations of external objects.

The universe of internal objects is ruled by a set of laws related to this universe, referred as LI in this description. Computer algorithms have already been formalized such that a formalization of LI already exists, which concerns internal objects such as representations of external objects.

Those internal objects have a name. They can "exist" before being named. However, they are not usable as long as they can't be named. Indeed programs or commands access the internal objects only by means of their names, actually programs themselves are sequences of names that the processing unit understands.

External objects are typically of two kinds:

1. elementary quanta of information (often called "data") under the form of numerical values. Their representations are independent from the environment, this is the prime material for computing called "data processing";
2. non-elementary information under the forms of imprecise characteristics (very often qualitative), they need a context to be interpreted. Those information being knowledge representations, are rarely under the forms of numerical values, but merely under the forms of symbols. Such symbols are the prime material of AI (Artificial Intelligence) that we call "symbols processing".

Representations of external objects are hence under two forms:

- data,
- symbols.

Data and symbols can be accessed by programs, as set out above, by means of names (as any internal object). Symbols are different from data in the sense that they are themselves names.

A typical sentence complying with the laws LE is the equation $E = m \cdot c^2$. Such a sentence complies with the laws LE and/or LI and is built up according to some grammars (e.g. PASCAL syntax) which define said syntactic axis. A valuation function $\gamma$ has been assigned to the valuation of names. Actually, such a valuation function might be quite complicated.

Names

In computer science, names are given to internal objects and to representations of external objects. A terminal name is just a name related to an internal object; it is only used to identify the respective internal object. The terminal name is what is used in direct addressing without further substitutions. However, there exist other names not being directly related to an internal object. These names are so-called non-terminal names. In context with the present invention, the structure of the set of names, being terminal (direct addressing) as well as non-terminal (indirect addressing), within a computer is addressed.

Review of Category Concepts

The following abbreviations are used below: Hom = homomorphism; X = carthesian product; a,b,c = individuals of set $\Theta$. If $\Theta$ is a set as given in:

$$f \leftarrow \left\{ \begin{array}{l} \mathrm{Hom}(a,b) \\ \text{with } (a,b) \in \Theta \times \Theta, \\ \text{with } (a,b,c) \in \Theta \times \Theta \times \Theta \end{array} \right\}, \qquad [1]$$

then f is a category, the individual set of which is $\Lambda(f) = \Theta$, if and only if:

a) for any $(a,b)\ \varepsilon\ \Theta \times \Theta$, $\mathrm{Hom}(a,b)\ \varepsilon\ \mu(f)$ is a set of morphisms,
b) for any $a\ \varepsilon\ \Theta$, $j(a){:}a \rightarrow a(j(a)\ \varepsilon\ \mathrm{Hom}(a,a))$ is an application called identity noted ormula /'1' sub 'a'/,
c) for any $(a,b,c)\ \varepsilon\ \Theta \times \Theta \times \Theta$
$k(a,b,c){:}\ \mathrm{Hom}(b,c) \times \mathrm{Hom}(a,b) \rightarrow \mathrm{Hom}(a,c)$ is an application called composition of morphisms from a to b and from b to c,
d) for any $(a,b)\ \varepsilon\ \Theta \times \Theta$ and any $z\ \varepsilon\ \mathrm{Hom}(a,b)$, we have $z \cdot 1_a = z = 1_b \cdot z$, (axiom of unitarity)
e) for any $(a,b,c,d)\ \varepsilon\ \Theta \times \Theta \times \Theta \times \Theta$ and any $(z'', z', z)\ \varepsilon\ \mathrm{Hom}(c,d) \times \mathrm{Hom}(b,c) \times \mathrm{Hom}(a,b)$ we have $(z'' \cdot z') \cdot z = z'' \cdot (z' \cdot z)$ (axiom of associativity).

Please note that objects of a category are called individuals ormula /Iota/ to avoid ambiguities within this description. Henceforth, a category F is defined by:

- the set of individuals $\Lambda(F)$,
- the set of morphisms $\mu(F)$, and
- the set of identity morphisms ormula /'1' sub 'x'/.

The composition of morphisms has been considered as being the composition of functions as in classical mathematics.

Examples of classical categories are:

Set is made of
individuals all small sets
morphisms all functions between them.
Grp is made of
individuals all small groups
morphisms all morphisms of groups.

CRng is made of
individuals all small commutative rings
morphisms their morphisms.

(Grp = group; CRng = commutative ring)

Definition of a Space

In order to be able to better describe the present invention, the following is defined. If Θ is a set of names, a space E is a category made of:

- a finite subset of Θ, named Λ(E),
- a unique morphism m ε μ(E), for any pair (ormula /'n' sub '1'/, ormula /'n' sub '2'/) (ε Λ(E) × Λ(E)), and
- an identity morphism ormula /'1' sub 'n'/, for any name n ε Λ(E).

Please note that individuals of a space E are internal object names. For this reason, objects of a category have been specified in this invention as individuals to avoid potential ambiguities.

In the following, some additional remarks concerning spaces: A terminal space is a space made of terminal names. There exists an order between names formed by the morphisms μ(E) of a space. An order can be looked at as a morphism in the manner shown below [2] for integers with natural order. The concept of order is in this way a set of morphisms between any objects of the set.

$$1 \rightarrow 2 \rightarrow 3 \rightarrow . . . \rightarrow n \qquad [2]$$

A set of names Θ can be partitioned by taking a subset of names among Θ to build Λ(E). It is herein postulated that a pair (Λ(E1), Λ(E2)) is such that

$$\Lambda(E1) \cap \Lambda(E2) = O \qquad [3]$$

Wherein O is an empty set.
If, in practice, this axiom [3] is not verified, it is admitted that it will always be possible to split Λ(E1) and Λ(E2), so it could be verified. The set of names Θ is finite. When partitioning Θ, one gets a finite number of Λ(E) and a finite number of spaces E.

The Functor Concept

A functor is similar to a morphism (co-)domain of which are categories. Functors are made of two functions such that

- the first function, referred to as function i, maps every individual ormula /lota 'x'/ of the domain category into individuals ormula /lota prime 'x'/ of the co-domain category,
- the second function, referred to as function m,, maps each morphism of the domain category into morphisms of the co-domain category, and
- the way those two functions operate must be commutative in the manner illustrated in Figure 5.

An example of a classical functor is described in short. The forgetful functor U

$$U: Grp \rightarrow Set \qquad [4]$$

assigns to each group Grp the set U(Grp) of its elements, thereby forgetting the multiplication and hence the group structure (U(grp) = co-domain of functor U). Furthermore, the forgetful functor U assigns to each morphism

$$f: Grp \rightarrow Grp' \qquad [5]$$

of groups the same function f. This function f is just regarded as a function between sets.

Definition of a Management

A management is herein defined as being a category $\phi$ which is made of:

- a finite set $\Lambda(\phi)$ of the spaces E,
- for every e1 $\varepsilon$ $\Lambda(\phi)$, a unique functor f $\varepsilon$ $\mu(\phi)$ which relates it to e2 $\varepsilon$ $\Lambda(\phi)$, and
- an identity functor $1_e$, for any individual e $\varepsilon$ $\Lambda(\phi)$.

Some remarks on management and the category of functors follow. As any space Ex $\varepsilon$ $\Lambda(\phi p)$ is identified by a functor 1ex, it will often be assumed that $\phi$p is a category of functors. A management $\phi$p can henceforth be made up only of the following functors: identity functor 1ex, and functors f relating identity functors. In this way, only the set of functors $\mu(\phi p)$ may continue to be considered and $\Lambda(\phi p)$ is empty. Due to this a management $\phi$p can be simply defined as a set $\mu(\phi.p)$.

As can be seen, there exist relations between spaces and managements. A space E might belong to several managements $\phi$x which means that such a space E is not linked to a specific management. However, a space is identified to a specific management as soon as it has an identity functor 1ex within it. Since the number of spaces is finite, one to one relations between them are finite. Due to this, the number of managements is finite, too.

Example of a Management

Following is an example of a management. This example might be used to define more complex managements taking a reductionist approach. Given is a management $\phi$n made of two spaces E1, E2, and their functor f. The triple ($\Lambda$(E1), $\Lambda$(E2), f) is made of the pair ($\Lambda$(E1), $\Lambda$(E2)) with E1 and E2 $\varepsilon\Lambda(\phi n)$, and of a functor f $\varepsilon$ $\mu(\phi n)$ between spaces $\Lambda$(E1) and $\Lambda$(E2). This triple is sufficient to describe the management $\phi$n.

Let the processing environment of the present invention, for example a parallel processing environment, be a set $\Theta = \Lambda(E1) \cup \Lambda(E2)$ . If a name does not belong to $\Lambda(E1) \cup \Lambda(E2)$, it does not possess the desired attribute to be put among names, whether of $\Lambda$(E1) or whether of $\Lambda$(E2). These names are not handled by management $\phi$n, since they can not be defined, i.e. the possible objects of such names are not usable. The functor f, mapping any name ormula /'n' sub '1'/ $\varepsilon$ $\Lambda$(E1) into a name ormula /'n' sub '2'/ $\varepsilon$ $\Lambda$(E2), allows the substitution engine, according to the present invention, to understand without any ambiguity, the relation between the two spaces E1 and E2.

The set of names $\Theta$ classified in spaces, and the functor between such spaces makes it possible to define the parts of the whole and the manner in which these parts are related to each other. The triple ($\Lambda$(E1), $\Lambda$(E2), f) is hence sufficient to define a management, as already mentioned.

As set out in the above sections, a system, with category $\phi$ introduced, is henceforth made of:

- resources,
- processes,
- representations of external objects,
- spaces of names, and
- functors.

The present invention, which is centered on the two latter, allows one to set off the concept of management which has been introduced as a structure on the set of object names and defined as a category of functors.

Natural Transformations

A natural transformation is a morphism relating two functors between two given categories. An example of a natural transformation is described now. Let detK(M) be the determinant of the n $\times$ m matrix M with entries in the commutative ring K. Thus M is non-singular when the detK(M) is a unit, and detK(M) is a morphism

$$GLnK \rightarrow K^* \qquad [6]$$

of groups, i.e. a morphism in the group Grp (GLnK)
(* = k - {0}) . Because the determinant detK(M) is defined in the same manner for all rings K, each morphism

$$f{:}K \rightarrow K' \qquad [7]$$

of commutative rings leads to a commutative diagram shown in Figure 6. This Figure illustrates the principle of a natural transformation and states that the transformation

$$\text{det:GLn} \rightarrow 0^* \qquad [8]$$

is natural between two functors CRng → Grp (GLn).

An algebra of a natural transformation A1m is made of:

- a finite set of functor names f(A1m), and
- a finite set of natural transformations g(A1m) on f(A1m).

The Set of Natural Transformations

g(A1m) is made of natural transformations, building functors out of functors. Note that the natural transformations described hereafter are provided as mere examples. They are not intended as such to be part of the inventive substitution engine. It is conceivable that a substitution engine according to the present invention might imbed some natural transformations as part of a starter set, or that the user defines his own natural transformations.

The following natural transformations are only given to comprehend the nature of the Algebra of Natural Transformations, being part of this invention.

$$\text{Action gx (f1,1e1)gx} \qquad [9]$$

The action gx transforms the E1 space, i.e. 1e1, by means of functor f1 to build up an environment 1ef1. gx allows at the same time to define an environment 1ef1 and to notify the substitution engine. Upon said notification, the substitution engine carries out functor f1 on said space E1.

$$\text{Construction g// E(f1,f2, ... ,fn)g//} \leftarrow \rightarrow \text{((E)f1,(E)f2, ... ,(E)fn)} \qquad [10]$$

g// transforms the list of functor names (f1,f2,...,fn) into n independent functors with E as domain. These functors are independent in so far as the order by which they are carried out is of no importance. Due to this, these n functors can be carried out in parallel.

$$\text{List } g_{caten} \quad \begin{matrix} \text{(fn,(1e1, ... ,1en)g,)gx} \leftarrow - \rightarrow \text{((f1,1e1)gx, ... ,(fn,1en)gx)}g_{caten} \\ \text{fn} \leftarrow \text{(f1, ... ,fn)g//} \end{matrix} \qquad [11]$$

(caten = catenation)

To elucidate the relation between g// and $g_{caten}$, an example is given. A relation between g// and $g_{caten}$ might be built up in the manner shown in Figure 7. Please note that $g_{caten}$ is a natural transformation which applies only to identity functors which identify spaces. The isotony of functor (f1,...,fn) g// is due to the natural transformation $g_{caten}$.

$$\text{Composition go E(f2,f1)go} \leftarrow \rightarrow \text{((E)f1)f2} \qquad [12]$$

The composition go transforms a list of functor names (f1,f2,...,fn) unto a functor which is the mathematical composition of the n functors of the go domain, in the given order illustrated in Figure 8. go is a natural transformation which defines the sequence of functors, and g// describes their parallelism.

The previous natural transformations have been presented as examples. It is assumed that the inventive substitution engine has the capability to have other natural transformations defined by the user so to tailor this engine into the required Algebra.

Substitution Engine

A substitution engine, according to the present invention, is assumed to be a means which has learned to realize, or carry out, a functor on a space. This functor can for instance be of the form (...)g//. By carrying out a functor on a space, an environment is defined. This environment is the functor's space in which a processus is processed. In consequence, a processus is here identified by its environment (f,En)gx.

From the substitution engine's point of view, an environment is a space of n dimensions, with n being the number of functors to be executed either simultaneously, in parallel, or independently. It is assumed that the substitution engine, after appliance of the algebra of natural transformations on (f,En)gx, finally has to carry out the following terminal functor (f1,f2,f3) g//. f1, f2, or f3 can be functors of the form ((fn,fm)go). Therefore, the environment to be carried out is a 3-dimensional space. Along said given environment, triplets of domain names (n1,n2,n3) are successfully processed by the substitution engine. Those successive triplets define the shape of the environment.

Discontinuities and Categories of Discontinuities

A discontinuities category A2n is made of:

- the set of terminal functor names $\Lambda 1$(A2n),
- the set of environment $\Lambda 2$(A2n), and
- for every f1 $\varepsilon$ $\Lambda 1$(A2n) a unique discontinuity w $\varepsilon$ $\mu$(A2n) which relates it to (f2,1em)gx $\varepsilon$ $\Lambda 2$(A2n).

Given an environment (f,1en)gx to be carried out by a substitution engine, the algebra A1n allows the substitution engine to finally find the terminal functors it has to carry out, as shown in Figure 9. For every terminal functor that has to be carried out, a way must be given to the substitution engine to know what to do when the co-domain of a functor fn is undefined. This way is named a discontinuity. There is one discontinuity per terminal functor and it maps the given functor to an environment. A discontinuity is herein symbolized by w. A co-domain of a terminal functor through a discontinuity is defined to be an environment. It has not been taken into consideration that a co-domain of a discontinuity could be of another nature. However, this invention does not preclude such a co-domain to be defined with other attributes.

If the set of functors $\Lambda$(A) is finite, the set of discontinuities $\mu$(A2) itself is finite. A discontinuity is a rupture in a shape which is defined in an environment. The discontinuity maps a functor fn unto an environment (fm,1ep)gx. The question is, whether the discontinuity can be thought as a conditional operator applied to the functor fn, as given by:

$$(fn \rightarrow fn,(fm,1ep)gx) \quad [13]$$

which means

$$fn = T \rightarrow fn;\ fn = F \rightarrow (fm,1ep)gx \quad [14]$$

using the description given in the article "Can Programming be Liberated from the von Neumann Style ? A Functional Style and Its Algebra of Programs", J. Backus, Communications of the ACM, Vol. 21, No. 8, August 1978, pp. 613 - 641. The above might lead to consider a discontinuity as part of the operators of an algebra A1n, which would be a false statement, since a discontinuity is not a natural transformation, because in general, it is not isotonic.

Architecture

The architecture An is defined as being made of:

- an algebra A1n, and
- a discontinuities' category A2n.

The algebra of natural transformations A1n maps any functor name to another functor name, but finally leads the substitution engine to know which terminal functors it has to carry out. Therefore, globally the algebra of natural transformations maps an environment into terminal functor names. On the contrary, discontinuities map any terminal functor name to an environment. Therefore, the algebra of natural transformations and discontinuities' categories are inverse of one another, as schematically illustrated in Figure 10.

Substitution Engine Rules

In the below list, the rules are given, which a substitution engine, subject to the present invention, applies to carry out an architecture:

1. Names are provided in some registers along with the natural transformation action (f1,1e1)gx.
2. For the substitution engine, each register is known to contain a name from a specific space such that the substitution engine is able to get the information which functors it has to carry out for each register.

3. the substitution engine is activated when all registers are set.
4. the substitution engine carries out natural transformations of algebra A1n of the current architecture An.
5. the substitution engine carries out first of all the valuation natural transformations gg, and then the others.
6. the substitution engine carries out those natural transformations preferably in parallel, for each register it has to handle.
7. the substitution engine realizes those natural transformations until it has found a terminal functor.
8. when the substitution engine has found a terminal functor, it carries out this latter unto the name contained in the given register.
9. names processing is done, preferably in parallel, for each register to handle, until all names are terminal names.
10. when the contents of all registers have been treated by the substitution engine, i.e. all the names obtained are terminal names, and if no functor has been undefined, then those terminal names are valuated (given a content) and processing continues according to the rules of the related mechanical automaton(s).

The flow-chart shown in Figure 12 reflects the all essential steps of the present method for accessing data to obtain the terminal name which enables the computer to actually access the data addressed by this name. In a first step it is checked whether the name is terminal name or not. This step is indicated as box 50 in Figure 12. If said name is not a terminal name, the algebra of natural transformation is applied on an environment in order to get a terminal functor, as illustrated in box 51. The environment referred to is in this example given as (...)gx. In the next step 52 said terminal functor is applied on said name in order to obtain said terminal name needed by the computer to access the respective data. Once this terminal name has been determined, this terminal name is provided in a last step, indicated by box 53, to said computer. If the name is already a terminal name, i.e. the check carried out at the beginning results in a positive answer (Y = Yes), this name being a terminal name is directly provided to the computer.

In a second embodiment of the present an additional step, illustrated in Figure 13, is carried out prior to the step where said terminal functor is applied on said name, step 52 in Figure 12, to get said terminal name. First it is checked whether the the substitution of said environment by said terminal functor is defined, step 54 in Figure 13. If the answer is yes, the next step, i.e. step 52 in Figure 12, will be carried out. In the case that the substitution is not defined a discontinuity is executed prior to proceeding with step 52 in Figure 12. A discontinuity, hereinabove sometimes symbolized by w, is a rupture in a shape which is defined in an environment. The discontinuity maps a functor fn unto an environment (fm,1ep)gx as already described.

Further embodiments or modifications of the present invention are conceivable by employing

1. user defined natural transformations for application on an environment;
2. predefined natural transformations; and/or
3. user defined functors for use in step 52 of Figure 12.

As outlined hereinabove, the present method and apparatus, also referred to as substitution engine, is of particular interest in the field of parallel processing and numerical intensive computing, where several of the above steps can be carried out in parallel taking several names as input to obtain the respective terminal names. This approach helps to reduce the time needed for indirections substantially.

## Claims

**1.** Method for accessing data by handling a name to obtain the respective terminal name which enables a computer to access the data addressed by said name, said method being characterized by the following steps:

a) if said name is not a terminal name, applying the algebra of natural transformation on an environment (w) to get a terminal functor,
b) applying said terminal functor on said name to get said terminal name,
c) providing the terminal name obtained at the end of the last step to said computer.

**2.** Method of claim 1, wherein said algebra of natural transformation is either pre-defined or user-defined.

**3.** Method of claim 1 or 2, wherein the algebra of natural transformation is applied to said name until a terminal functor has been found.

**4.** Method of claim 1, wherein the following steps are carried out prior to step b) of claim 1:

- checking whether the substitution of said environment by said terminal functor is defined

- if said substitution is defined, proceeding with step b) of claim 1,
- if said substitution is not defined, executing a discontinuity prior to proceeding with step b) of claim 1.

**5.** Method of claim 1, wherein, before carrying out the steps of claim 1, it is checked whether said name is already a terminal name, and if yes, the first two steps a) and b) of claim 1 being omitted.

**6.** Method of claim 1, wherein the steps of claim 1 are carried out in parallel taking several names as input to obtain the respective terminal names

**7.** Apparatus being part of or being connected to a computer for accessing data by handling a name to obtain the respective terminal name which enables said computer to access the data addressed by said name, said apparatus comprising:

a) means for checking whether said name is a terminal name;
b) means for applying the algebra of natural transformation on an environment (w) to get a terminal functor, if said name is not a terminal name;
c) means for applying said terminal functor on said name to get said terminal name,
d) means for providing the terminal name obtained to said computer.

**8.** Apparatus of claim 7, wherein said means for applying the algebra of natural transformation on an environment applies either a pre-defined or user-defined algebra of natural transformation.

**9.** Apparatus of claim 7 or 8, wherein the algebra of natural transformation is applied to said name until a terminal functor has been found.

**10.** Apparatus of claim 7, comprising:

- means for checking whether the substitution of said environment by said terminal functor is defined, and
- means for executing a discontinuity in case that said substitution is not defined.

**11.** Apparatus of claim 7, comprising means for checking whether said name is already a terminal name, and bypass means which allow forward said terminal name directly to said computer.

**12.** Apparatus of claim 7, wherein at least some of said means are arranged in parallel such that several names are taken in parallel as input to obtain the respective terminal names.

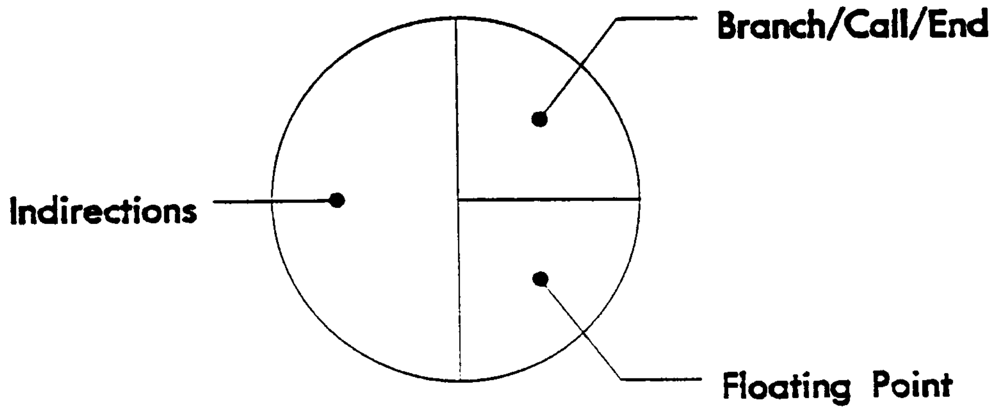
Branch/Call/End
Indirections
Floating Point

FIG. 1

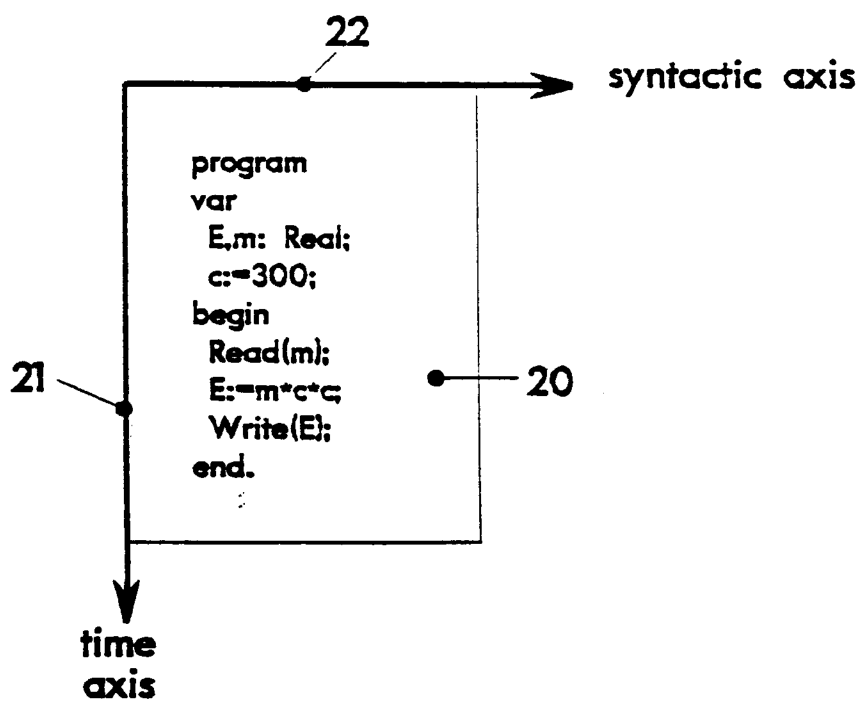
22
syntactic axis
program
var
E,m: Real;
c:=300;
begin
Read(m);
E:=m*c*c;
Write(E);
end.
21
20
time
axis

FIG. 2

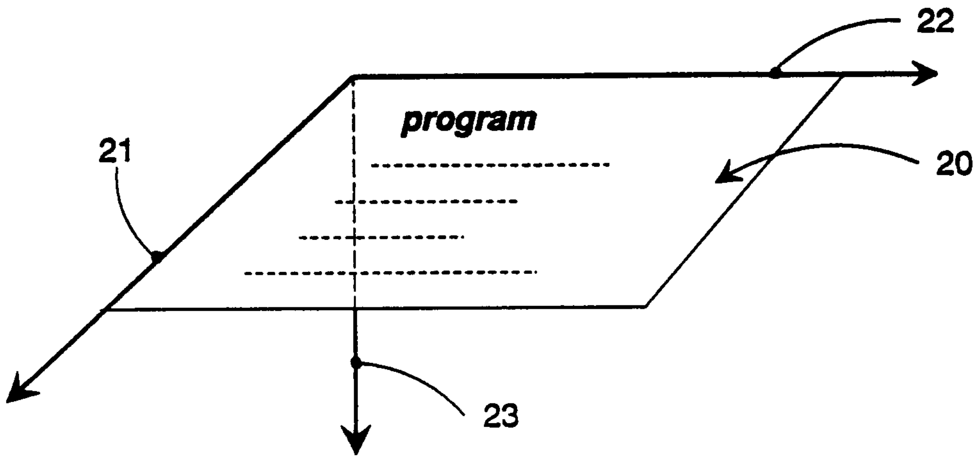
22
program
21
20
23

FIG. 3

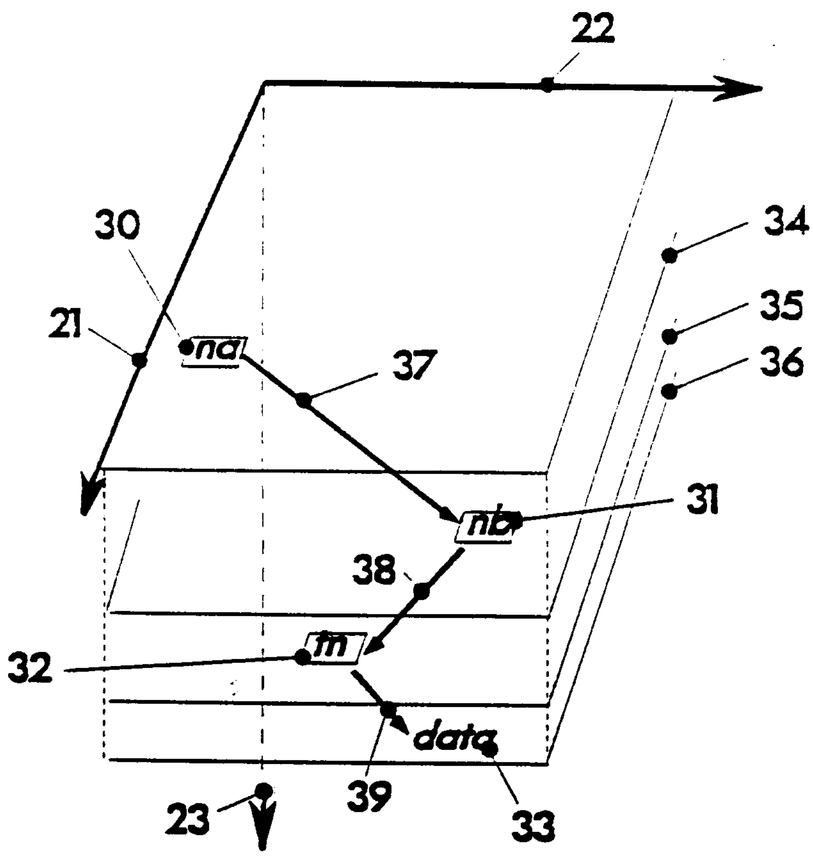
22
30
34
35
21
na
37
36
nb
31
38
fn
32
data
23
39
33

FIG. 4

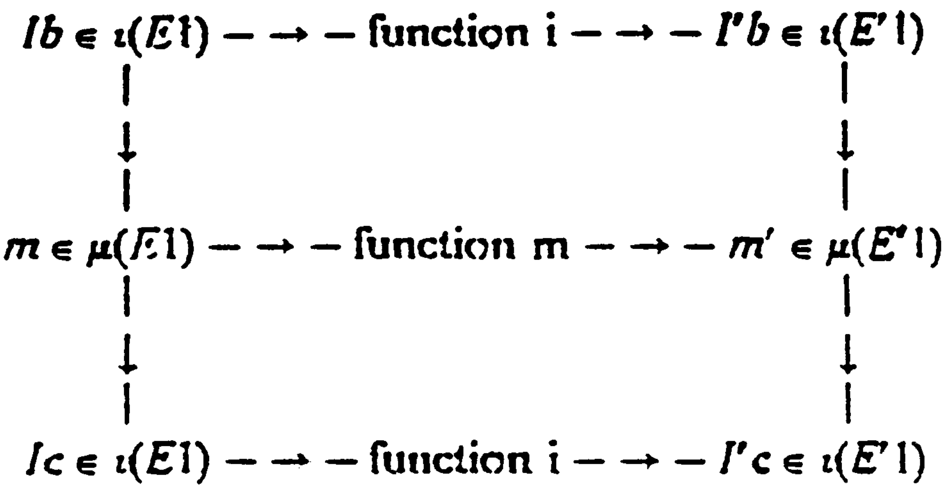

$Ib \in \iota(E1)$ function i $I'b \in \iota(E'1)$
$m \in \mu(E1)$ function m $m' \in \mu(E'1)$
$Ic \in \iota(E1)$ function i $I'c \in \iota(E'1)$


FIG. 5

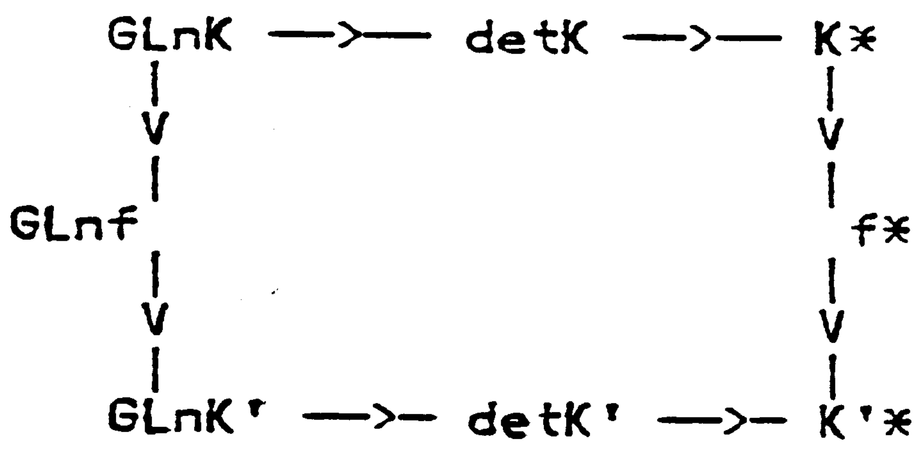

GLnK
detK
K*
GLnf
f*
GLnK'
detK'
K'*


FIG. 6

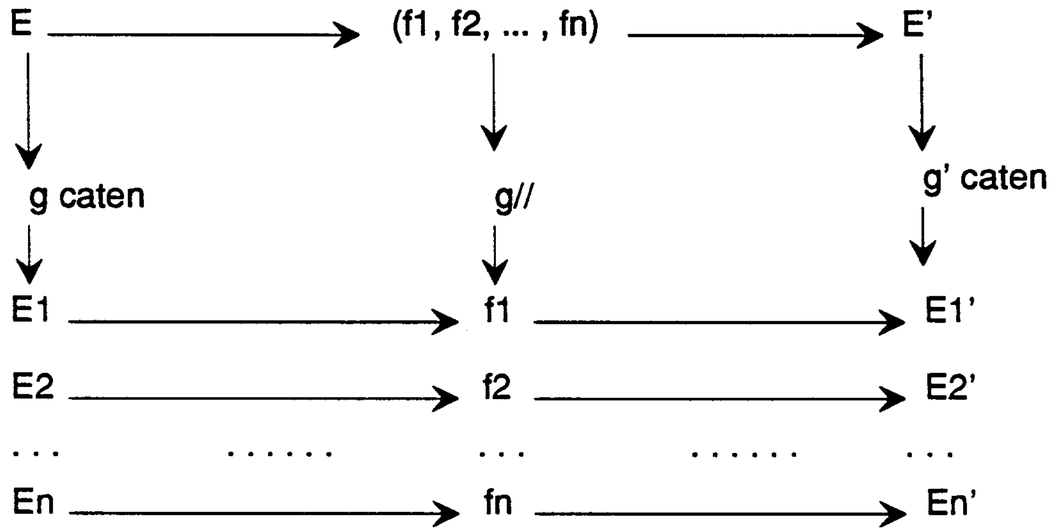
E
(f1, f2, ... , fn)
E'
g caten
g//
g' caten
E1
f1
E1'
E2
f2
E2'
En
fn
En'

FIG. 7

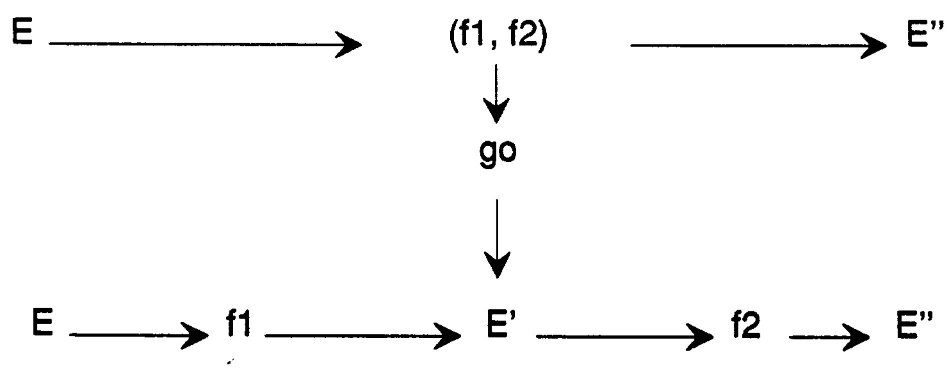
E
(f1, f2)
E"
go
E
f1
E'
f2
E"

FIG. 8

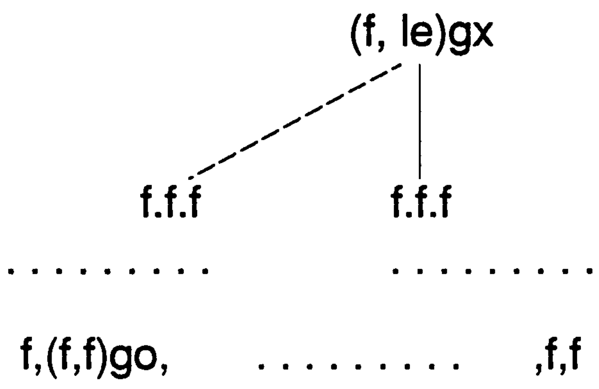


FIG. 9

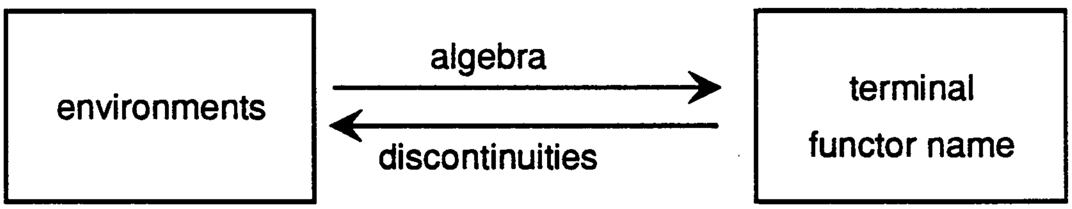


FIG. 10

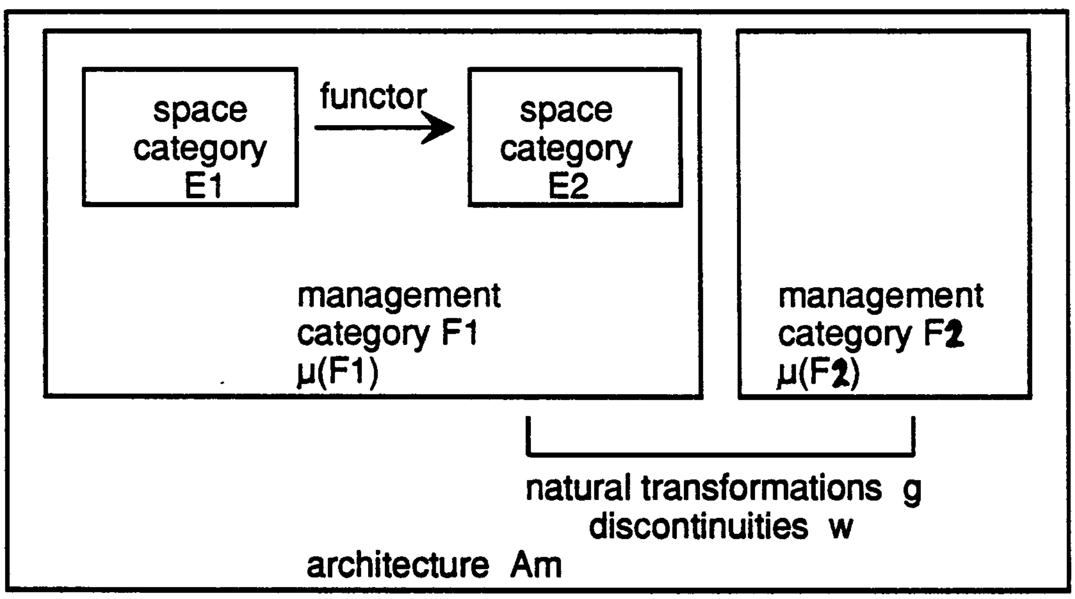


FIG. 11

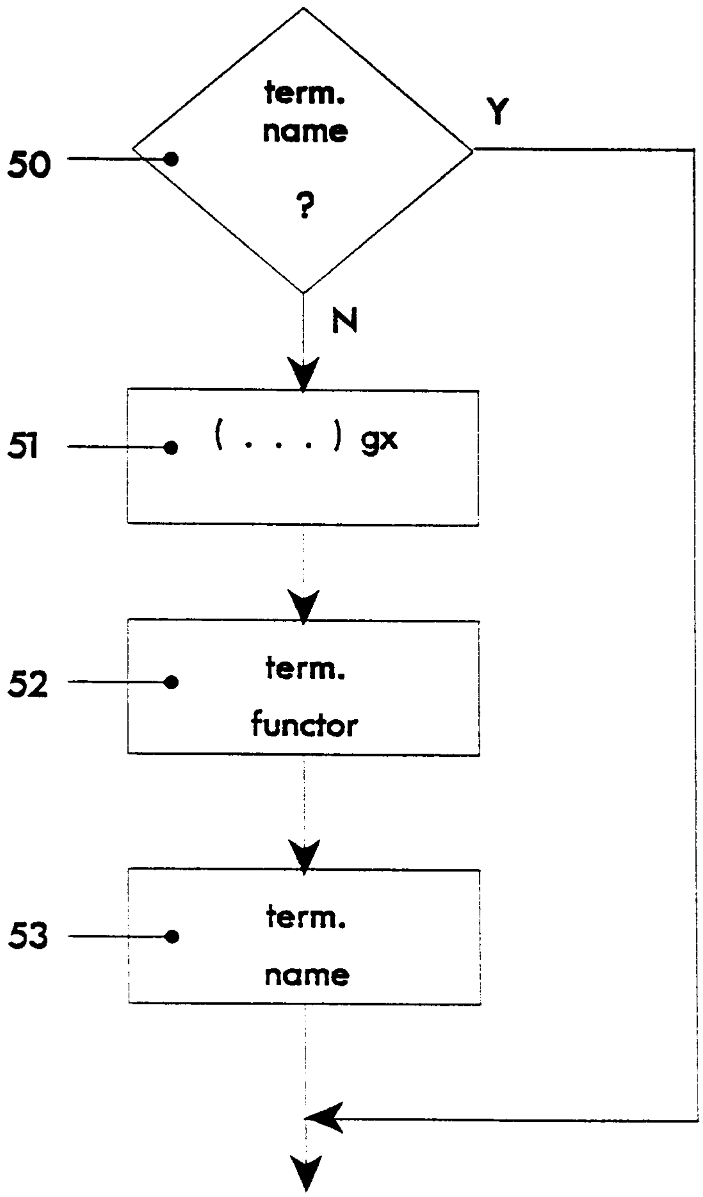
term.
name
?
Y
N
50
51
( . . . ) gx
52
term.
functor
53
term.
name

FIG. 12

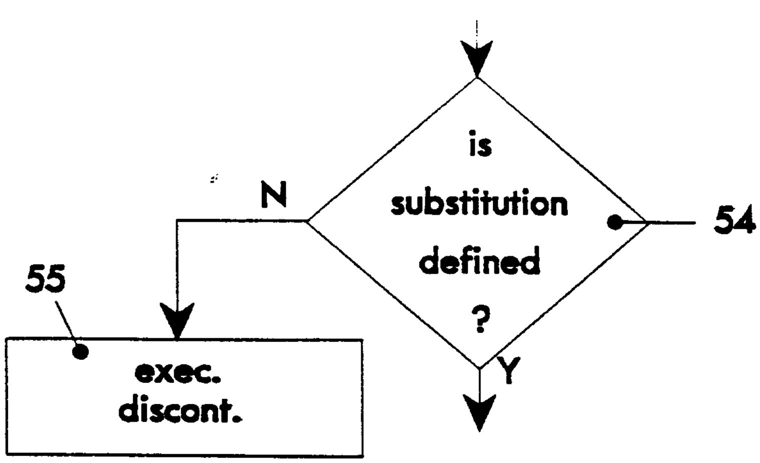
is
substitution
defined
?
N
Y
54
55
exec.
discont.

FIG. 13

European Patent Office

# EUROPEAN SEARCH REPORT

Application Number
EP 94 11 0651

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 539 637 (AT&T BELL LABORATORIES)<br>* column 1, line 1 - column 4, line 49 *<br>* column 5, line 20 - line 56 *<br>* claims 1-4 *<br>--- | 1-12 | G06F9/44<br>G06F9/45 |
| A | PROCEEDINGS SUPERCOMPUTING '92, 16 November 1992, MINNEAPOLIS, MN, US<br>pages 522 - 534<br>M.W.HALL ET AL. 'Interprocedural Compilation of Fortran D for MIMD Distributed-Memory Machines'<br>* the whole document *<br>--- | 1-12 | |
| A | PROCEEDINGS OF THE 1987 INTERNATIONAL CONFERENCE ON PARALLEL PROCESSING, 17 August 1987<br>pages 742 - 744<br>Y.EISENSTADTER ET AL. 'Exploiting Locality of Reference in MIMD Parallel Symbolic Computation'<br>* abstract *<br>* page 742, left column, line 1 - page 743, left column, line 8 *<br>* page 743, right column, line 52 - page 744, right column, line 30 *<br>--- | 1-12 | TECHNICAL FIELDS SEARCHED (Int.Cl.6)<br>G06F |
| A | EP-A-0 168 827 (HITACHI LTD)<br>* page 1, line 5 - line 12 *<br>* figure 1 *<br>* page 6, line 1 - line 17 *<br>--- | 1-12 | |
| A | DISTRIBUTED COMPUTING,<br>vol.3, no.2, May 1989, BERLIN DE<br>pages 51 - 60<br>D.E.COMER ET AL. 'Understanding Naming in Distributed Systems'<br>* the whole document *<br>----- | 1-12 | |

The present search report has been drawn up for all claims

| Place of search | Date of completion of the search | Examiner |
|---|---|---|
| THE HAGUE | 25 November 1994 | Scharfenberger, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)